# EUROPEAN PATENT APPLICATION

(11) **EP 2 012 006 A1**
(43) Date of publication of application: **07.01.2009**
(21) Application number: 06778458.7
(22) Date of filing: 08.06.2006
(51) Int. Cl.: F03D 3/00

(54) **ELECTRICAL-ENERGY GENERATOR**

(30) Priority: 18.04.2006 ES 200600887 U
(71) Applicant: Ariza Garcia San Miguel Jose Mª, 28028 Madrid (ES); Casares Pelaez Enrique, 28028 Madrid (ES)
(72) Inventor: Ariza Garcia San Miguel Jose Mª, 28028 Madrid (ES); Casares Pelaez Enrique, 28028 Madrid (ES)
(74) Representative: Munoz Garcia, Antonio
(86) International application number: PCT/ES2006/000338
(87) International publication number: WO 2007/118910

(57) **Abstract**

1.- An electric power generator, of the type that comprises a plinth or base from which a vertical fixed axis emerges on which a second axis is assembled by means of bearings that supports a blade forming a conic helicoid, that provides the mobile axis with a rotary movement due to the wind; the aforementioned fixed axis is tubular and comprises an electric coil within, working as a stator, whereas the mobile axis, also tubular, comprises a number of permanent magnets within, thus becoming a rotor, such that the actual axis of the generator becomes at the same time the dynamo and the alternator converting mechanical energy into electric power.

2.- An electric power generator, according to claim 1, whose characteristic plinth or lower base is capable of accommodating a set of batteries for storage of the electric power produced at the axis of the generator.

## Description

### ABSTRACT

The present invention refers to an electric power generator, of the type that converts wind power into electric power.

The purpose of the invention is thus to devise a generator capable of using wind power, in order to convert it into electric power , having a straightforward, economical and effective structuring specifically affecting power conversion means, using the wind movement sensors as a power conversion means.

### BACKGROUND OF THE INVENTION

Within the fields pertaining to wind power conversion, the standard method used for converting such energy into electric power involves aerogenerators, that incorporate a mast of considerable diameter and height, on whose upper end is a horizontally mounted rotor supporting a number of blades that are likewise of considerable weight and size, intended to be activated by the wind in a similar way as in a traditional windmill, in order to provide the axis with a rotary movement that can be used by an alternator or electric generator as such to the ends of generating electric power.

For the proper performance of the aerogenerators, a large air flow is required, thus involving in addition to the large investment expenses in the relevant apparatus, the requirement of setting them up in specific areas, usually in extremely high mountain regions with virtually constant wind in order to render them profitable, hence implying significant establishment costs slowing-down to a great extent the practical implementation.

In this respect the applicant is the proprietor of a utility model comprising a wind generator that, compared with the aforementioned aerogenerators, enables an excellent level of performance in confined installations, not requiring a large expenditure or investment or substantial air flows, or undue wind speed. In particular, this generator is formed by means of a fixed vertical axis, appropriately supported by a lower plinth, with a blade assembled on the axis by means of bearings forming a conic helicoid, whose spine progressively and upwardly decreases in diameter, such that the said helicoid supports a second axis coaxially assembled on the first axis and whose lower end is crowned with a pinion, that, by means of an appropriate transmission, operates a dynamo or an electric generator converting the mechanical energy into electric power.

### SUMMARY OF THE INVENTION

The generator proposed by the invention is based on a structure comprised in the abovementioned utility model, and its main feature refers to the substitution of the dynamo or generator situated inside the cavity in the plinth of the apparatus, whereby instead the fixed part of the axis comprises power generating coils while, in respect of these, the magnetic field created by permanent magnets assembled on the mobile axis moves with a rotary movement.

This way the axis of the aerogenerator directly becomes the electric power generator, namely the transformer of the mechanical power of the mobile axis into electric power.

Thus, the generator does not need a cavity or space within its lower plinth, because the traditional transmission pinions and the dynamo or the alternator are no longer present; on the other hand, the said cavity can be used to place a set of batteries for electric power storage.

Obviously, the invention can be likewise applied to electric power generators whereby, by using the aforementioned structure, the helicoid blade does not rotate due to the wind, yet due to a column of rising air caused by a thermal point located at the base of the generator.

### BRIEF DESCRIPTION OF THE DRAWINGS

In order to complete the present description, and to the ends of enabling a better understanding of the features of the invention, a set of drawings are attached as part of the description in accordance with an example of the preferred practical application, of the invention; the drawings show without limitation the following:

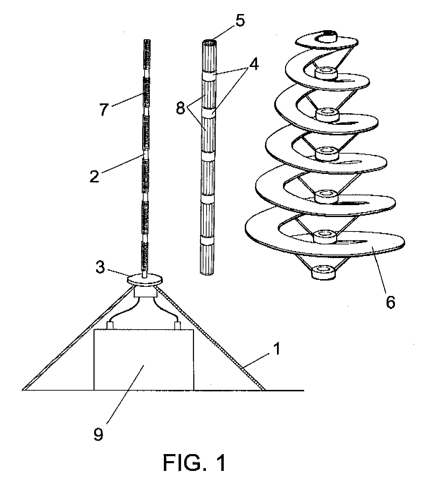

Figure 1.- Shows a perspective detail drawing of an electric power generator in accordance with the purpose of the present invention.

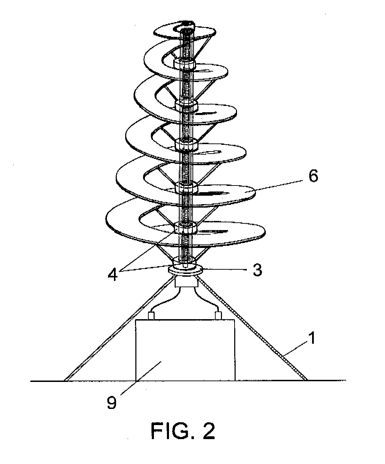

Figure 2.- Shows a perspective assembly drawing matching the previous figure when assembled.

### DESCRIPTION OF THE PREFERRED EMBODIMENTS

Upon viewing the mentioned figures, it can be observed that the power generator proposed in the present invention comprises a supporting plinth or base (1), that can be built into the ground or appropriately supported by it or by any suitable support; a fixed axis emerges vertically from the plinth (2), whose height is adequate and on which, by means of a lower axial bearing (3), a number of radial bearings are assembled (4) and a second tubular axis (5), that in turn supports a conic-helicoid-shaped blade (6).

The axis (2), also being tubular, is equipped with an electric coil (7) in its interior, thus acting as a stator, while a number of permanent magnets (8) are placed on the outer tubular axis (5), whereby the axis works as a rotor, appropriately propelled by the blade (6).

The rotary movement of the permanent magnets (8) supplied to the generator by the blade (6) due to the effect of the wind, generates a variable magnetic field in which the coil (7) of the stator or fixed axis (2) is placed, whereby said coil produces an electric current, that is supplied to a set of storage batteries (9), suitably located within the plinth (1), from which power supply can be sought whenever necessary; on the other hand, in the absence of batteries, the coil outlet (7) may be directly connected to the main power supply.

This way the double axis of the blade (6) will itself operate as a dynamo or alternator.

## Claims

1. An electric power generator, of the type that comprises a plinth or base from which a vertical fixed axis emerges on which a second axis is assembled by means of bearings that supports a blade forming a conic helicoid, that provides the mobile axis with a rotary movement due to the wind; the aforementioned fixed axis is tubular and comprises an electric coil within, working as a stator, whereas the mobile axis, also tubular, comprises a number of permanent magnets within, thus becoming a rotor, such that the actual axis of the generator becomes at the same time the dynamo and the alternator converting mechanical energy into electric power.

2. An electric power generator, according to claim 1, whose characteristic plinth or lower base is capable of accommodating a set of batteries for storage of the electric power produced at the axis of the generator.
